# EUROPÄISCHE PATENTSCHRIFT

(11) **EP 2 307 176 B1**
(45) Veröffentlichungstag und Bekanntmachung des Hinweises auf die Patenterteilung: **25.01.2012**
(21) Anmeldenummer: 09777712.2
(22) Anmeldetag: 06.08.2009
(51) Int. Cl.: B25J 5/02, B25J 9/00, B25J 15/04, G05B 19/418

(54) **VERFAHREN UND VORRICHTUNG ZUM DURCHFÜHREN EINER ARBEITSOPERATION AN EINEM BEWEGTEN WERKSTÜCK**
METHOD AND DEVICE FOR CARRYING OUT A WORK OPERATION ON A MOVING WORKPIECE
PROCÉDÉ ET DISPOSITIF POUR RÉALISER UNE OPÉRATION DE TRAVAIL SUR UNE PIÈCE D'USINAGE MOBILE

(30) Priorität: 09.08.2008 DE 102008037239
(43) Veröffentlichungstag der Anmeldung: 13.04.2011
(73) Patentinhaber: Daimler AG, 70327 Stuttgart (DE)
(72) Erfinder: HABISREITINGER, Uwe, 72290 Lossburg (DE); SCHEEFF, Rainer, 71120 Grafenau (DE)
(74) Vertreter: JENSEN & SON
(86) Internationale Anmeldenummer: PCT/EP2009/005712
(87) Internationale Veröffentlichungsnummer: WO 2010/017914

(56) Entgegenhaltungen:
- EP-A2- 1 110 854
- DE-A1-102006 026 132
- JP-A- 8 141 945
- JP-A- 60 221 230

## Beschreibung

Die Erfindung betrifft ein Verfahren zum Durchführen einer Arbeitsoperation an einem auf einer Fördereinrichtung kontinuierlich voran bewegten Werkstück durch einen mit dem Werkstück mitbewegten Industrieroboter nach dem Oberbegriff von Patentanspruch 1. Die Erfindung betrifft weiterhin eine Vorrichtung zum Durchführen eines derartigen Verfahrens nach dem Oberbegriff von Patentanspruch 7. Ein derartiges Verfahren und eine derartige Vorrichtung sind in der DE 10 2006 026 132 A1 offenbart.

Für die Serienfertigung von Werkstücken existieren im Wesentlichen zwei grundlegende Konzepte. Bei der getakteten Fertigung werden die zu bearbeitenden Werkstücke durch eine Fördereinrichtung zwischen Arbeitsstationen bewegt und dort im still stehenden Zustand bearbeitet. Dies ist bei Produktionslinien mit einer Mehrzahl von Bearbeitungsstationen problematisch, da letztlich der Takt der Weiterbewegung der Werkstücke zwischen den Arbeitsstationen von der Arbeitsstation mit der längsten Bearbeitungsdauer abhängig ist. Dies führt dazu, dass schnellere Arbeitsstationen nicht bei voller Kapazität arbeiten können. Gegebenenfalls müssen Werkstückspeicher oder Pufferzonen eingerichtet werden, was die Fertigung weiter verteuert.

Zu bevorzugen ist daher eine kontinuierliche, bandsynchrone Bearbeitung des Werkstückes. Hier findet die Bearbeitung des Werkstückes statt, während sich dieses Werkstück noch auf der Fördereinrichtung voranbewegt. Bandsynchrone Fertigungsverfahren werden heutzutage vorwiegend eingesetzt, wenn Werkstücke durch menschliche Arbeiter bearbeitet werden. Durchgängige bandsynchrone Bearbeitung über eine gesamte Fertigungslinie ist dabei der Ausnahmefall. Automatisierte Bearbeitungsschritte, insbesondere solche, welche durch Industrieroboter durchgeführt werden, eignen sich derzeit nämlich nur schlecht für einen bandsynchronen Betrieb. Diese Bearbeitungsschritte werden daher in der Regel im getakteten Betrieb durchgeführt, was zu zusätzlichen Problemen bei einem Wechsel zwischen getakteten und bandsynchronen Abschnitten einer Fertigungslinie führt. Es ist daher wünschenswert, Verfahren bereit zu stellen, die es erlauben, robotische Bearbeitungsschritte im bandsynchronen Betrieb durchzuführen.

Ein derartiges Verfahren ist in der DE 103 13 463 B3 offenbart. Ein Industrieroboter wird dabei auf einer separaten Führung parallel zu einer Fördereinrichtung, welche das Werkstück trägt, mitbewegt. Um Positionsungenauigkeiten zwischen dem Industrieroboter dem Werkstück auszugleichen, wird der Fahrschemel des Industrieroboters dabei an einen Werkstückträger gekoppelt. Positionsungenauigkeiten zwischen Werkstück und Werkstückträger werden zu Beginn des Verfahrens durch Vermessen in einer stationären Messeinrichtung erfasst und an die Industrierobotersteuerung weitergeleitet. Um die erforderliche Positionsgenauigkeit zu gewährleisten, sind bei einem derartigen Verfahren jedoch aufwendige Koppelungsvorrichtungen zwischen dem Fahrschemel des Industrieroboters und dem Werkstückträger nötig. Hier besteht praktisch kein Spielraum für Toleranzen, da der Einmessvorgang ja vor dieser Koppelung erfolgt.

Der vorliegenden Erfindung liegt somit die Aufgabe zugrunde, ein Verfahren und eine Vorrichtung zum Durchführen einer Arbeitsoperation an einem bewegten Werkstück durch einen synchron mitbewegten Industrieroboter bereitzustellen, welches die genannten Nachteile des Standes der Technik überwindet. Insbesondere soll eine hohe Positionsgenauigkeit zwischen dem Industrieroboter, dem Werkstück und einem Werkstückträger gewährleistet werden.

Diese Aufgabe wird gelöst durch ein Verfahren mit den Merkmalen des Patentanspruchs 1 sowie durch eine Vorrichtung mit den Merkmalen des Patentanspruchs 7.

Das Werkstück wird bei einem erfindungsgemäßen Verfahren auf einer Fördereinrichtung kontinuierlich voranbewegt. Neben der Fördereinrichtung wird der Industrieroboter entlang einer parallel verlaufenden gesonderten Längsführung verfahren, wobei ein Basisteil des Industrieroboters während des gemeinsamen Durchlaufes der Bearbeitungsstrecke starr mit einem Werkstückträger gekoppelt ist. Um die Bewegung des Industrieroboters von Toleranzen der Längsführung zu entkoppeln, ist dieser schwimmend bezüglich eines in der Längsführung laufenden Fahrwerks gelagert. Erfindungsgemäß ist vorgesehen, dass der Industrieroboter ein wechselbares Werkzeug aufweist. Zu Beginn des gemeinsamen Durchlaufes der Arbeitsstrecke wird zunächst ein Scannerwerkzeug bzw. ein Messkopf mit einem Arbeitsarm des Industrieroboters verbunden und mittels dieses Scannerwerkzeuges eine Relativlage zwischen dem Werkstück und dem Werkstückträger bestimmt. Damit sind nun vorteilhafter Weise die exakten Koordinaten des Werkstückes im Basiskoordinatensystem des Industrieroboters selbst bekannt. Somit werden gleichzeitig Toleranzen bezüglich der Ankopplung des Basisteils des Industrieroboters an den Werkstückträger durch die Vermessung mit ausgeglichen. Es ist also ermöglicht, Koppelungseinrichtungen zwischen dem Basisteil des Industrieroboters und dem Werkstückträger zu verwenden, welche höhere Toleranzen aufweisen, als aus dem Stand der Technik bekannt.

Nach diesem Vermessungsvorgang wird schließlich das Scannerwerkzeug bzw. der Messkopf gegen ein Bearbeitungswerkzeug ausgetauscht. Hierbei wird bevorzugt ein Bearbeitungswerkzeug zum Aufbringen einer Hohlraumkonservierung auf das Werkstück verwendet. Um diesen Austausch schnell und effizient durchzuführen ist es dabei vorteilhaft, eine Werkzeugschnellwechselvorrichtung und ein Werkzeugmagazin bereitzustellen.

Durch die Vermessung der Relativlage von Werkstück, Werkstückträger und Industrieroboter ist es nun vorteilhaft ermöglicht, eine einfach gestaltete Koppelungseinrichtung zum starren Koppeln des Basisteils mit dem Werkstückträger zu verwenden. In weiterer Ausgestaltung der Erfindung ist hierzu ein Spannzylinder vorgesehen, welcher das Basisteil mit einem Längsholm des Werkstückträgers verspannt. Der zumindest eine Spannzylinder ist dabei in einer bevorzugten Ausführungsform der Erfindung auf einer verschiebbar mit dem Basisteil verbundenen Zustellplatte angeordnet. Diese wird zum starren Koppeln des Basisteils mit dem Werkstückträger so verschoben, dass ein an ihr angeordnetes Anschlagelement in Anlage an ein korrespondierendes Element des Werkstückträgers kommt, bevor der Spannzylinder mit dem Längsholm verspannt wird. Die Ausgangsposition des Industrieroboters bezüglich des Werkstückträgers muss also vorteilhafter Weise nicht mehr absolut präzise eingehalten werden, um die Koppelungseinrichtung in die gewünschte Koppelungsposition zu bringen. Die exakte Positionierung wird vielmehr durch die Bewegung der Zustellplatte erzeugt. Dadurch entstehende Toleranzen können wiederum durch den eingangs geschilderten Einmessprozess mittels des Messkopfs ausgeglichen werden.

Nach dem starren Koppeln des Basisteils mit dem Werkstückträger wird in weiterer Ausgestaltung der Erfindung ein Antrieb des Fahrwerks des Industrieroboters ausgekuppelt. Die Antriebsenergie für die Bewegung des Industrieroboters durch die Arbeitsstrecke wird somit vollständig von der Fördereinrichtung bereitgestellt. Dies vermindert den Verschleiß des Fahrwerkes verglichen mit aus dem Stand der Technik bekannten Verfahren, in denen auch während des gemeinsamen Durchlaufes der Arbeitsstrecke ein aktiver Antrieb des Fahrwerkes verwendet wird. Um Geschwindigkeitstoleranzen zwischen Fahrwerk und Fördereinrichtung auszugleichen, muss bei einem aktiven Antrieb des Fahrwerkes eine Schlupfkupplung vorgesehen sein, welche unter starkem Verschleiß leidet. Diese kann hier entfallen. Da keine Relativbewegung zwischen dem Industrieroboter und dem Werkstück stattfindet, ist auch der Schleppabstand gleich Null.

Weiterhin folgt bei dem erfindungsgemäßen Verfahren der Industrieroboter sämtlichen Bewegungen des Werkstücks in allen Raumrichtungen, insbesondere auch in vertikaler Richtung durch den Gewichtsausgleich in vertikaler Richtung. Auf diese Weise entstehen zwischen Industrieroboter und Werkstück keinerlei Zwangskräfte, so dass die Gefahr der Beschädigung des Werkstücks oder der Störung des Fertigungsprozesses minimiert wird.

Die Erfindung betrifft weiterhin eine Vorrichtung zum Durchführen einer Arbeitsoperation an einem an einer Fördereinrichtung kontinuierlich voranbewegten Werkstück durch einen mit dem Werkstück mitbewegten Industrieroboter während eines gemeinsamen Durchlaufes durch eine bestimmte Arbeitsstrecke. Der Industrieroboter ist dabei auf einer neben der Fördereinrichtung verlaufenden gesonderten Längsführung verfahrbar. Das Basisteil des Industrieroboters ist während des gemeinsamen Durchlaufes starr mit einem Werkstück träger koppelbar, wobei Lagerungselemente vorgesehen sind, über welche das Basisteil schwimmend bezüglich eines in der Längsführung verfahrbaren Fahrwerks lagerbar ist. Bei solchen Lagerungselementen kann es sich beispielsweise um Luftfederbälge handeln. Erfindungsgemäß verfügt der Industrieroboter über eine Werkzeugwechselvorrichtung mit einem Werkzeugmagazin und einem Werkzeughalter. Über den Werkzeughalter sind dabei zumindest zwei unterschiedliche Werkzeuge mit einem Arbeitsarm des Industrierobotere verbindbar. Eine Scannervorrichtung ist zum Vermessen einer Relativlage zwischen dem Werkstückträger und dem Werkstück mit dem Arbeitsarm des Industrieroboters verbindbar. Weiterhin sind Bearbeitungswerkzeuge vorgesehen, wobei bevorzugt ein Bearbeitungswerkzeug zum Aufbringen einer Hohlraumkonservierung auf das Werkstück mit dem Arbeitsarm des Industrieroboters verbindbar ist. Damit ist, wie eingangs geschildert, vorteilhaft eine Vermessung der Relativlage von Werkstück, Werkstückträger und Industrieroboter direkt im Bezugssystem des Industrieroboters ermöglicht.

In weiterer Ausgestaltung ist zumindest ein Spannzylinder vorgesehen, mittels welchem das Basisteil des Industrieroboters mit einem Längsholm des Werkstückträgers starr koppelbar ist. Dieses ist bevorzugter Weise auf einer Anstellplatte angeordnet, welche gegenüber dem Basisteil verschiebbar gelagert ist. Mittels der Anstellplatte ist der Spannzylinder in eine Sollposition bezüglich des Werkstückträgers bewegbar. Das Ansteuern der Sollposition zur Koppelung des Basisteils des Industrieroboters an den Werkstückträger muss also vorteilhafter Weise nicht mehr durch eine exakte Positionierung des Fahrwerkes des Industrieroboters in der Längsführung durchgeführt werden, sondern wird die Bewegung der Anstellplatte wesentlich erleichtert.

In weiterer Ausgestaltung ist ein Anschlagelement an der Anstellplatte vorgesehen, welches zur Bestimmung dieser Sollposition in Anlage an ein korrespondierendes Element des Werkstückträgers bringbar ist.

In einer weiteren Ausführungsform ist eine Kupplung vorgesehen, mittels welcher eine Antriebseinheit des Fahrgestells mit einem Antriebsrad des Fahrgestells kuppelbar ist. Damit ist es ermöglicht, den Industrieroboter in einer Arbeitsphase vor dem starren Koppeln mit dem Werkstückträger unter eigenem Antrieb in eine Sollposition zu verfahren. Nach dem Koppeln mit dem Werkstückträger kann diese Kupplung ausgekuppelt werden, so dass die Bewegungsenergie des Industrieroboters von der Fördereinrichtung bereitgestellt wird. Nach Ende des gemeinsamen Durchlaufes der Arbeitsstrecke kann der Industrieroboter wieder vom Werkstückträger gelöst werden. Zu diesem Zeitpunkt kann die genannte Kupplung wieder eingekuppelt werden, so dass der Industrieroboter unter eigenem Antrieb in seine Ausgangsposition zurückkehren kann.

Im Folgenden soll anhand der Zeichnung die Erfindung und ihre Ausführungsformen näher erläutert werden. Dabei zeigen:
- Fig. 1: eine perspektivische Darstellung einer erfindungsgemäßen Vorrichtung;
- Fig. 2: eine perspektivische Detaildarstellung eines Fahrwerks für einen Industrieroboter;
- Fig. 3: eine perspektivische Darstellung eines Antriebs für ein solches Fahrwerk; und
- Fig. 4: eine perspektivische Darstellung einer Zustellplatte zum Koppeln des Basisteils eines Industrieroboters an einem Längsholm eines Werkstückträgers.

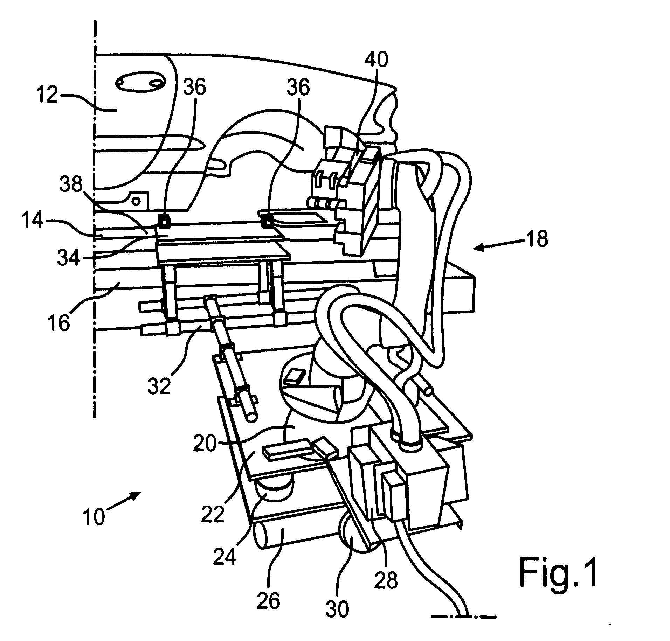

Fig. 1 zeigt eine perspektivische Ansicht einer im Ganzen mit 10 bezeichneten Vorrichtung zur Durchführung des erfindungsgemäßen Verfahrens. Das zu bearbeitende Werkstück, hier eine Fahrzeugkarosserie 12 ist auf einem Werkstückträger 14 befestigt, welcher beweglich auf einer Fördereinrichtung 16 aufgenommen ist. Ein Industrieroboter 18 ist mit seinem Basisteil 20 auf einer Grundplatte 22 montiert, welche über Balgzylinder 24 auf einem Fahrwerk 26 gelagert ist. Mittels eines Motors 28 und Rädern 30 kann sich so der Industrieroboter 18 parallel zur Fördereinrichtung 16 fortbewegen.

Um eine sichere Positionierung des Industrieroboters 18 bezüglich der Fahrzeugkarosserie 12 zu erzielen, ist das Basisteil 20 des Industrieroboters 18 über eine Gestänge 32 mit einer Zustellplatte 34 verbunden. Die Zustellplatte 34 ist wiederum über Spannzylinder 36 mit einem Längsholm 38 des Werkstückträgers 14 verbindbar. Damit wird eine definierte Relativlage zwischen Industrieroboter 18 und Fahrzeugkarosserie 12 hergestellt.

An einem Manipulatorarm 40 des Industrieroboters 18 befindet sich eine hier nicht gezeigte Werkzeugschnellwechselvorrichtung. Damit kann der Industrieroboter 18 verschiedene Werkzeuge aus einem Werkzeugmagazin aufnehmen und zum Einsatz bringen. Nach dem Koppeln des Industrieroboters 18 mittels der Spannzylinder 36 an dem Längsholm 38 des Werkstückträgers 14 entnimmt der Industrieroboter 18 dem Werkzeugmagazin zunächst eine Scannereinrichtung. Diese wird am Manipulatorarm 40 montiert und dient der Vermessung der Relativlage zwischen Fahrzeugkarosserie 12 und Werkstückträger 14. Durch die definierte Anbindung des Basisteils 20 des Industrieroboters an den Werkstückträger 14 ist somit auch eine definierte Relativlage des Industrieroboters 18 zur Fahrzeugkarosserie 12 gegeben. Die Ergebnisse dieser Messung werden vom Industrieroboter 18 an eine ebenfalls nicht gezeigte Steuereinrichtung übermittelt, welche das Bewegungsprogramm für den Industrieroboter 18 an die nun bekannten genauen Koordinaten der zu bearbeitenden Stellen an der Fahrzeugkarosserie 12 anpasst. Auf der Basisplatte 22 des Industrieroboters 18 können weiterhin an sich bekannte Sicherheitsvorrichtungen installiert sein, welche ein gleichzeitiges Bearbeiten der Kraftfahrzeugkarosserie 12 durch den Industrieroboter 18 und durch menschliche Arbeiter ermöglicht.

Nachdem der Industrieroboter 18 die Vermessung der Fahrzeugkarosserie 12 abgeschlossen hat, wird über die Werkzeugschnellwechselvorrichtung das Scannerwerkzeug gegen das eigentliche Bearbeitungswerkzeug ausgetauscht.

Im gezeigten Ausführungsbeispiel handelt es sich dabei um eine Düse zum Aufbringen eines Mediums zur Hohlraumkonservierung.

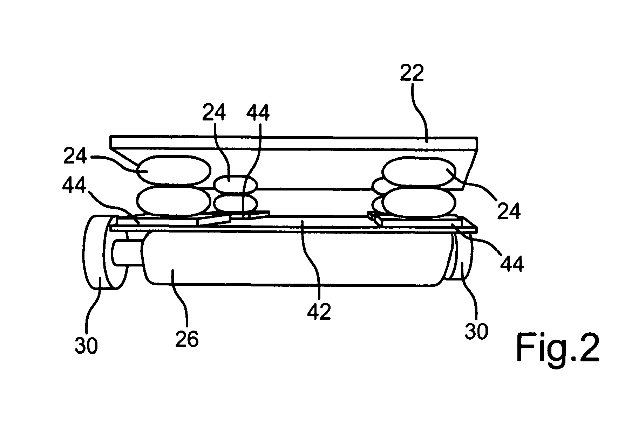

Fig. 2 zeigt eine detaillierte Ansicht des Fahrwerks des Industrieroboters 18. Am eigentlichen Fahrwerkkörper 26 sind Räder 30 aus Polyoxymethylen in Wälzlagern gelagert. Polyoxymethylen besitzt einen sehr geringen Reibwiderstand und ist extrem verschleißarm, was das Material ideal für diese Anwendung macht. Die Räder können dabei auf ebenen Boden, sowie in Stahlschienen laufen. Der Fahrwerkskörper 26 ist bevorzugterweise als Drucklufttank ausgebildet und kann auf einfachste Weise Druckluft für die auf einer Grundplatte 42 montierten Balgzylinder 24 bereitgestellt werden. Die Balgzylinder 24 tragen dabei die Basisplatte 22 für den Industrieroboter 18, der in dieser Darstellung nicht gezeigt ist. Zur Grundplatte 42 des Fahrwerks 26 sind die Balgzylinder 24 mit Adapterplatten 44 abgeschlossen. Die Adapterplatten 44 sind dabei gleichzeitig als Dichtflansch ausgelegt, und ermöglichen eine Beaufschlagung der Balgzylinder 24 mit Druckluft aus dem Tank des Fahrwerks 26. Dadurch ist keine separate Zuführung der Luft zu den Balgzylindern 24 erforderlich. Durch die kürzestmögliche Kopplung ist eine ideale Lagerung der Basisplatte 22 gegenüber der Grundplatte 42 ermöglicht, da die Balgzylinder 24 äußerst dynamisch auf Bewegungen in der z-Achse reagieren können. Durch die gezeigte Lagerung der Basisplatte 22 über die Balgzylinder 24 ist die Basisplatte 22 also in allen Freiheitsgraden schwimmend von der Grundplatte 42 entkoppelt. Die Balgzylinder 24 können zusätzlich über Ventile mit höherem Druck beaufschlagt werden, um die Basisplatte 22 gegenüber der Grundplatte 42 anzuheben. Dies wird insbesondere beim Ankoppelvorgang des Industrieroboters 18 an den Werkstückträger 14 vor Bedeutung.

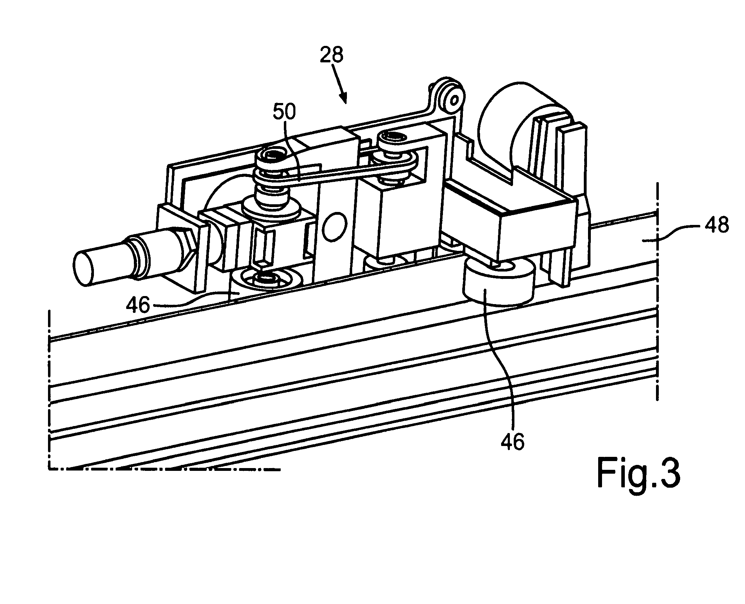

Die Räder 30 des Fahrwerks 26 werden dabei durch einen Luftmotor angetrieben. Eine schematische Darstellung eines solchen Luftmotors ist in Fig. 3 gezeigt. Der Luftmotor 28 treibt dabei eine Mehrzahl von um die z-Achse drehbaren Rollen 46, welche dem Antrieb und der Führung der gesamten Einheit entlang eines Führungswinkels 48 erlauben. Die Kraftübertragung von dem druckluftgetriebenen Luftmotor 28 auf die Führungsrollen 48 erfolgt dabei über Zahnrad-Ketten-Kombinationen 50. Die Ausführung des Antriebs als Luftmotor erlaubt ein gewisses Ausmaß an Schlupf Es ist während des Ankoppelvorgangs des Industrieroboters 18 an den Werkstückträger 14 von Bedeutung, da ja während dieses Ankoppelns die Geschwindigkeiten des Fahrwerks 26 sowie die Geschwindigkeit des Werkstückträgers auf der Fördereinrichtung 16 aneinander angeglichen werden müssen. Kleine Geschwindigkeitsunterschiede werden dabei durch Schlupf im Luftmotor 28 kompensiert. Eine separate Schlupfkupplung, welche verschleißanfällig ist, ist hier nicht nötig.

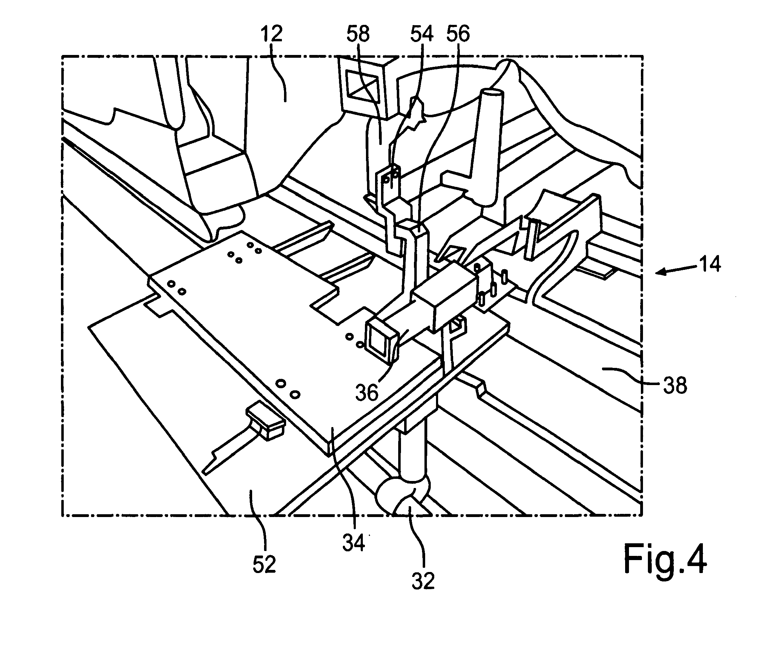

Fig. 4 zeigt schließlich eine perspektivische Ansicht der Zustellplatte 34. Die eigentliche Zustellplatte 34, die den Spannzylinder 36 zum Ankoppeln der gesamten Vorrichtung an den Längsholm 38 des Werkstückträges 14 trägt, ist dabei selbst beweglich gegenüber einer weiteren Platte 52 gelagert. Weiterhin ist ein schwenkbares Anschlagelement 54 über einen Träger 56 mit der Zustellplatte 34 verbunden. Beim Ankoppelvorgang des Industrieroboters 18 an den Werkstückträger 14 wird das Anschlagelement 54 gegenüber dem Träger 56 ausgeklappt und die Zustellplatte 34 so verfahren, dass das Anschlagelement 54 in Anschlag an ein korrespondierendes Element 58 des Werkstückträgers 14 kommt. In dieser Position ist nun gesichert, dass der Spannzylinder 36 den Holm 38 greifen kann und die gesamte Vorrichtung daran festlegen kann. Über das Gestänge 32 ist somit sowohl der Industrieroboter über die Basisplatte 22, als auch das Fahrwerk 26 unter Vermittelung der Balgzylinder 24 fest mit dem Werkstückträger 14 verbunden.

Im Folgenden wird der Gesamtablauf eines erfindungsgemäßen Verfahrens kurz erläutert:
Zum Startzeitpunkt befindet sich der Industrieroboter 18 in einem Anfangsbereich der gemeinsam durchlaufenden Arbeitsstrecke. Dann wird zunächst der Antrieb 28 des Industrieroboters eingekuppelt. Parallel dazu wird mit Hilfe der Werkzeugwechselvorrichtung ein Messkopf, also die Scannereinheit aus dem Werkzeugmagazin entnommen und an den Manipulatorarm 40 adaptiert. Der Antrieb wird nun auf Vorlauf geschaltet, so dass der Industrieroboter 18 parallel zur Fördereinrichtung 16 sich voranbewegt. Hierbei wird ständig überprüft, ob der Industrieroboter 18 die korrekte Koppelungsposition bezüglich eines Werkstückträgers 14 mit einer zu bearbeitenden Fahrzeugkarosserie 12 erreicht hat. Ist diese Position erreicht, so wird die Zustellplatte 34 durch Verschieben gegenüber der Grundplatte 52 positioniert. Durch Erniedrigung des Drucks in den Balgzylindern 24 wird die Basisplatte 22 abgesenkt, so dass die Spannzylinder 36 in die richtige Relativlage zum Längsholm 38 des Werkstückträgers 14 geraten. Sobald diese Relativlage erreicht wird, werden die Spannzylinder 36 gespannt, so dass sich eine feste, formschlüssige Verbindung zwischen dem Industrieroboter 18 und dem Werkstückträger 14 ergibt. Zur Positionssicherung der Zustellplatte 34 wird diese dabei über Sicherungsbolzen fixiert.

Zu diesem Zeitpunkt wird der Antrieb 28 des Industrieroboters 18 deaktiviert und ausgekuppelt. Der Vortrieb des Industrieroboters 18 gemeinsam mit dem Werkstückträger 14 wird somit von diesem Zeitpunkt an ausschließlich durch die Fördereinrichtung 16 geleistet. Da nun eine definierte Relativposition zwischen dem Industrieroboter 18, dem Werkstückträger 14 und der zu bearbeitenden Fahrzeugkarosserie 12 hergestellt ist, wird zu diesem Zeitpunkt mittels des Messkopfes die Relativlage zwischen diesen Teilen vermessen. Hierzu wird bevorzugt ein 3-D-Messkopf mit analoger Messwertausgabe verwendet, dessen Daten direkt an die Steuerung des Industrieroboters 18 übermittelt werden. Diese kann daraufhin das Steuerprogramm für den Industrieroboter 18 auf Grundlage der gemessenen Koordinaten anpassen. Nach dem Einmessvorgang wird mittels der Werkzeugschnellwechselvorrichtung der Messkopf gegen eine Düse zum Auftragen eines Mediums zur Hohlraumkonservierung ausgetauscht. Während der Industrieroboter 18 sich weiterhin parallel zur bearbeitenden Fahrzeugkarosserie 12 bewegt, erfolgt nun die eigentliche Bearbeitung, nämlich das Aufbringen einer Hohlraumkonservierung auf entsprechende Stellen der Fahrzeugkarosserie 12.

Ist dieser Arbeitsschritt abgeschlossen, wird der Antrieb wieder eingekuppelt und auf Vorlage aufgeschaltet. Parallel dazu wird das Bearbeitungswerkzeug wieder von der Werkzeugschnellwechselvorrichtung gelöst und im Werkzeugmagazin abgelegt.

Nachdem nun der Industrieroboter wieder unter eigenem Antrieb fährt können die Spannzylinder gelöst werden, woraufhin die Balgzylinder wieder mit Druck beaufschlagt werden, um die Basisplatte 22 anzuheben. Die Zustellplatte 34 kann nun wieder aus ihrer Verriegelung gelöst werden, der schwenkbare Anschlag 54 wieder in seine Ruheposition zurückgeschwenkt werden und die gesamte Zustellplatte 34 schließlich wieder in ihre Ausgangsposition verbracht werden. Der Industrieroboter 18 ist nun am Ende der gesamten Arbeitsstrecke angelangt. An diesem Zeitpunkt wird der Antrieb deaktiviert und nach Abbau der Restgeschwindigkeit in Rücklaufmodus geschaltet, so dass der Industrieroboter 18 in seine Ausgangsposition zurückkehren kann. Ergibt die Prüfung, dass der Industrieroboter 18 wieder seine Ausgangsposition erreicht hat, so wird im letzten Schritt des Verfahrens der Antrieb des Industrieroboters 18 deaktiviert. Der Industrieroboter ist nun mit allen seinen Systemen wieder unter Ausgangsbedingungen, so dass das Verfahren zur Bearbeitung des nächsten Werkstückes neu beginnen kann.

## Patentansprüche

1. Verfahren zum Durchführen einer Arbeitsoperation an einem auf einer Fördereinrichtung (16) kontinuierlich voranbewegten Werkstück (12) durch einen mit dem Werkstück (12) mitbewegten Industrieroboter (18) während eines gemeinsamen Durchlaufes durch eine bestimmte Arbeitsstrecke, bei welchem der Industrieroboter (18) entlang einer neben der Fördereinrichtung (16) verlaufenden gesonderten Längsführung (48) verfahren wird und ein Basisteil (20) des Industrieroboter während des gemeinsamen Durchlaufes starr mit einem Werkstückträger (14) gekoppelt und schwimmend bezüglich eines in der Längsführung (48) laufenden Fahrwerks (26) gelagert wird,
**dadurch gekennzeichnet, dass**
der Industrieroboter (18) ein wechselbares Werkzeug aufweist, wobei zu Beginn des gemeinsamen Durchlaufes ein Scannerwerkzeug mit einem Arbeitsarm (40) des Industrieroboters (18) verbunden wird und eine Relativlage zwischen dem Werkstück (12) und dem Werkstückträger (14) bestimmt wird.

2. Verfahren nach Anspruch 1,
**dadurch gekennzeichnet, dass**
nach Bestimmen der Relativlage das Scannerwerkzeug gegen ein Bearbeitungswerkzeug ausgetauscht wird.

3. Verfahren nach Anspruch 2,
**dadurch gekennzeichnet, dass**
ein Bearbeitungswerkzeug zum Aufbringen einer Hohlraumkonservierung auf das Werkstück verwendet wird.

4. Verfahren nach einem der vorherigen Ansprüche,
**dadurch gekennzeichnet, dass**
zum starren Koppeln des Basisteils (20) mit dem Werkstückträger (14) zumindest ein Spannzylinder (36) verwendet wird, welcher das Basisteil (20) mit einem Längsholm (38) des Werkstückträgers (14) verspannt.

5. Verfahren nach Anspruch 4,
**dadurch gekennzeichnet, dass**
der zumindest eine Spannzylinder (36) auf einer verschiebbar mit dem Basisteil (20) verbundenen Zustellplatte (34) angeordnet ist, wobei die Zustellplatte (34) zum starren Koppeln mit dem Werkstückträger (14) so verschoben wird, dass ein an ihr angeordnetes Anschlagelement (54) in Anlage an ein korrespondierendes Element (58) des Werkstückträgers (14) kommt, bevor der Spannzylinder (36) mit dem Längsholm (38) verspannt wird..

6. Verfahren nach einem der vorherigen Ansprüche,
**dadurch gekennzeichnet, dass**
nach dem starren Koppeln des Basisteils (20) mit dem Werkstückträger (14) ein Antrieb (28) des Fahrwerks (26) ausgekuppelt wird.

7. Vorrichtung (10) zum Durchführen einer Arbeitsoperation an einem auf einer Fördereinrichtung (16) kontinuierlich voranbewegtem Werkstück (12) durch einen mit dem Werkstück (12) mitbewegten Industrieroboter (18) während eines gemeinsamen Durchlaufes durch eine bestimmte Arbeitsstrecke, wobei der Industrieroboter (18) auf einer neben der Fördereinrichtung (16) verlaufenden gesonderten Längsführung (48) verfahrbar ist und ein Basisteil (20) des Industrieroboters (18) während des gemeinsamen Durchlaufes starr mit einem Werkstückträger (14) koppelbar ist, wobei Lagerungselemente (24) vorgesehen sind, über welche das Basisteil (20) schwimmend bezüglich eines in der Längsführung (48) verfahrbaren Fahrwerks (26) lagerbar ist,
**dadurch gekennzeichnet, dass**
der Industrieroboter (18) über eine Werkzeugwechselvorrichtung mit einem Werkzeugmagazin und einem Werkzeughalter verfügt, wobei über den Werkzeughalter zumindest zwei unterschiedliche Werkzeuge mit einem Arbeitsarm (40) des Industrieroboters verbindbar sind, und eine Scannervorrichtung zum Vermessen einer Relativlage zwischen dem Werkstückträger (14) und dem Werkstück (12) mit dem Arbeitsarm (40) des Industrieroboters (18) verbindbar ist.

8. Vorrichtung (10) nach Anspruch 7,
**dadurch gekennzeichnet**,
ein Bearbeitungswerkzeug zum Aufbringen einer Hohlraumkonservierung auf das Werkstück mit dem Arbeitsarm (40) des Industrieroboters (18) verbindbar ist.

9. Vorrichtung (10) nach einem der Ansprüche 7 bis 8,
**dadurch gekennzeichnet**,
zumindest ein Spannzylinder (36) vorgesehen ist, mittels welchem das Basisteil (20) des Industrieroboters (18) mit einem Längsholm (38) des Werkstückträger (14) starr koppelbar ist.

10. Vorrichtung (10) nach Anspruch 9,
**dadurch gekennzeichnet,**
**dass** eine Anstellplatte (34) vorgesehen ist, welche gegenüber dem Basisteil (20) verschiebbar gelagert ist, und über welche der Spannzylinder (36) in eine Sollposition bezüglich des Werkstückträgers (14) bewegbar ist.

11. Vorrichtung (10) nach Anspruch 10,
**dadurch gekennzeichnet,**
**dass** ein Anschlagelement (54) an der Anstellplatte (34) vorgesehen ist, welches zur Bestimmung der Sollposition in Anlage an ein korrespondierendes Element (58) des Werkstückträgers (14) bringbar ist.

12. Vorrichtung (10) nach einem der Ansprüche 7 bis 11,
**dadurch gekennzeichnet,**
**dass** eine Kupplung vorgesehen ist, mittels welcher eine Antriebseinheit (28) des Fahrwerks (26) mit einem Antriebsrad (30) des Fahrwerks (26) kuppelbar ist.

## Claims

1. Method for carrying out a work operation on a workpiece (12) moving continuously in a forward direction on a conveying device (16) by means of an industrial robot (18) moving together with the workpiece (12) while passing together through a defined working path, wherein the industrial robot (18) is traversed along a separate longitudinal guide (48) extending adjacent to the conveying device (16) and wherein a base part (20) of the industrial robot is during the joint passage through the working path rigidly coupled to a work carrier (14) and floating with respect to a chassis (26) running in the longitudinal guide (48),
**characterised in that**
the industrial robot (18) comprises an exchangeable tool, wherein at the start of the joint passage a scanner tool is connected to the working arm (40) of the industrial robot (18) and a relative position between the workpiece (12) and the work carrier (14) is determined.

2. Method according to claim 1,
**characterised in that**
the scanner tool is replaced by a machining tool after the relative position has been determined.

3. Method according to claim 2,
**characterised in that**
a machining tool is used to apply a cavity seal to the workpiece.

4. Method according to any of the preceding claims,
**characterised in that**
at least one clamping cylinder (36), which clamps the base part (20) to a longitudinal spar (38) of the work carrier (14), is used for the rigid coupling of the base part (20) to the work carrier (14).

5. Method according to claim 4,
**characterised in that**
the at least one clamping cylinder (36) is mounted on an infeed plate (34) displaceably joined to the base part (20), wherein the infeed plate (34) is displaced in such a way for rigid coupling to the work carrier (14) that a stop element (54) located thereon comes into contact with a corresponding element (58) of the work carrier (14) before the clamping cylinder (36) is clamped to the longitudinal spar (38).

6. Method according to any of the preceding claims,
**characterised in that**
a drive (28) of the chassis (26) is disengaged after the base part (20) has been rigidly coupled to the work carrier (14).

7. Device (10) for carrying out a work operation on a workpiece (12) moving continuously in a forward direction on a conveying device (16) by means of an industrial robot (18) moving together with the workpiece (12) while passing together through a defined working path, wherein the industrial robot (18) is traversable along a separate longitudinal guide (48) extending adjacent to the conveying device (16) and wherein a base part (20) of the industrial robot can during the joint passage through the working path be rigidly coupled to a work carrier (14), wherein bearing elements (24) are provided by means of which the base part (20) can be mounted capable of floating with respect to a chassis (26) traversable in the longitudinal guide (48),
**characterised in that**
the industrial robot (18) is provided with a tool-changing device comprising a tool magazine and a tool holder, wherein at least two different tools can be connected to a working arm (40) of the industrial robot and a scanner device for measuring a relative position between the work carrier (14) and the workpiece (12) can be connected to the working arm (40) of the industrial robot (18).

8. Device (10) according to claim 7,
**characterised in that**
a machining tool can be connected to the working arm (40) of the industrial robot (18) to apply a cavity seal to the workpiece.

9. Device (10) according to any of claims 7 to 8,
**characterised in that**
at least one clamping cylinder (36) is provided, by means of which the base part (20) of the industrial robot (18) can be rigidly coupled to a longitudinal spar (38) of the work carrier (14).

10. Device (10) according to claim 9,
**characterised in that**
an infeed plate (34) is provided, which is displaceably mounted with respect to the base part (20) and by way of which the clamping cylinder (36) can be brought into a set position with respect to the work holder (14).

11. Device (10) according to claim 10,
**characterised in that**
a stop element (54) is provided on the infeed plate (34), which can be brought into contact with a corresponding element (58) of the work holder (14) to determine the set position.

12. Device according to any of claims 7 to 11,
**characterised in that**
a clutch is provided, by means of which a drive unit (28) of the chassis (26) can be coupled to a drive gear (30) of the chassis (26).

## Revendications

1. Procédé pour exécuter une opération de travail sur une pièce à usiner (12) se déplaçant en continu sur un dispositif de transport (16), au moyen d'un robot industriel (18) se déplaçant en même temps que la pièce à usiner (12) pendant un passage commun sur une ligne de travail déterminée, sur laquelle le robot industriel (18) peut se déplacer le long d'un guide longitudinal (48) distinct, qui court à côté du dispositif de transport (16) et une partie de base (20) du robot industriel, pendant le passage commun, étant couplée d'une manière rigide à un porte-pièce (14) et logée d'une manière flottante par rapport à un mécanisme de déplacement (26) mobile dans le guide longitudinal (48), **caractérisé en ce que** le robot industriel (18) présente un outil interchangeable, un outil de balayage, au début du passage commun sur la ligne de travail, étant relié à un bras de travail (40) du robot industriel (18), et une position relative, entre la pièce d'usinage (12) et le porte-pièce (14), étant déterminée.

2. Procédé selon la revendication 1, **caractérisé en ce que** lorsque la position relative est déterminée, l'outil scanneur est remplacé par un outil d'usinage.

3. Procédé selon la revendication 2, **caractérisé en ce qu'**un outil d'usinage est utilisé pour appliquer une protection des espaces creux sur la pièce à usiner.

4. Procédé selon l'une quelconque des revendications précédentes, **caractérisé en ce qu'**au moins un vérin de serrage (36) est utilisé pour coupler d'une manière rigide la partie de base (20) au porte-pièce (14), ledit vérin de serrage serre la partie de base (20) au moyen d'un longeron (38) du porte-pièce (14).

5. Procédé selon la revendication 4, **caractérisé en ce que** l'au moins un vérin de serrage (36) est disposé sur une plaque d'avance (34) reliée par coulissement à la partie de base (20), la plaque d'avance (34), pour le couplage au porte-outil (54), étant déplacée de telle manière qu'un élément de butée (54) disposé sur ladite plaque d'avance prenne appui sur un élément correspondant (58) du porte-pièce (14), avant que le vérin de serrage (36) ne soit serré par le longeron (38).

6. Procédé selon l'une quelconque des revendications précédentes, **caractérisé en ce qu'**une fois la partie de base (20) couplée au porte-pièce (14), un moteur du mécanisme de déplacement (26) est désaccouplé.

7. Dispositif (10) pour exécuter une opération de travail sur une pièce à usiner (12) se déplaçant en continu sur un dispositif de transport (16), au moyen d'un robot industriel (18) se déplaçant en même temps que la pièce à usiner (12) pendant un passage commun sur une ligne de travail déterminée, le robot industriel (18) pouvant se déplacer le long d'un guide longitudinal (48) distinct, qui court à côté du dispositif de transport (16) et une partie de base (20) du robot industriel, pendant le passage commun, étant couplée d'une manière rigide à un porte-pièce (14), des éléments de montage (24) permettant de monter de manière flottante la partie de base (20) par rapport à un dispositif de déplacement (26) mobile dans le guide longitudinal (48), **caractérisé en ce que** le robot industriel (18) dispose d'un dispositif de changement d'outil doté d'un magasin à outils et d'un porte-outil, au moins deux outils différents pouvant être reliés à un bras de travail (40) du robot industriel par le porte-outil, et un dispositif de balayage servant à mesurer une position relative entre le porte-pièce (14) et la pièce à usiner (12) pouvant être relié au bras de travail (40) du robot industriel (18).

8. Dispositif (10) selon la revendication 7, **caractérisé en ce qu'**un outil d'usinage servant à appliquer une protection des espaces creux sur la pièce à usiner peut être relié à l'arbre de travail (40) du robot industriel (18).

9. Dispositif (10) selon l'une quelconque des revendications précédentes 7 à 8, **caractérisé en ce qu'**au moins un vérin de serrage (36) permet de coupler de manière rigide la partie de base (20) du robot industriel (18) au longeron (38) du porte-pièce (14).

10. Dispositif (10) selon la revendication 9, **caractérisé en ce qu'**une plaque de réglage (34) est montée mobile par rapport à la partie de base (20) et permet de déplacer le vérin de serrage (36) dans une position prescrite par rapport au porte-pièce (14).

11. Dispositif (10) selon la revendication 10, **caractérisé en ce qu'**un élément de butée (54) placé sur la plaque de réglage (34) peut être mis en appui sur un élément correspondant (58) du porte-pièce (14) pour déterminer la position prescrite.

12. Dispositif (10) selon l'une quelconque des revendications précédentes de 7 à 11, **caractérisé en ce qu'**un dispositif d'accouplement permet d'accoupler une unité d'entraînement (28) du mécanisme de déplacement (26) à une roue d'entraînement (30) du mécanisme de déplacement (26).
